# EUROPEAN PATENT APPLICATION

(11) **EP 4 082 358 A1**
(43) Date of publication of application: **02.11.2022**
(21) Application number: 20906434.4
(22) Date of filing: 07.12.2020
(51) Int. Cl.: A23L 27/10, C12G 3/08, A23L 2/00, A23L 2/64

(54) **METHOD FOR PRODUCING DE-ALCOHOLIZED BEVERAGE, METHOD FOR PRODUCING ALCOHOLIC BEVERAGE, AND METHOD FOR PRODUCING AROMA COMPONENT DERIVED FROM ALCOHOL-CONTAINING BEVERAGE**

(30) Priority: 24.12.2019 JP 2019232204
(71) Applicant: Suntory Holdings Limited, Osaka 530-8203 (JP)
(72) Inventor: YONEZAWA, Daisaku, Kawasaki-shi, Kanagawa 211-0067 (JP)
(74) Representative: Vossius & Partner Patentanwälte Rechtsanwälte mbB
(86) International application number: PCT/JP2020/045462
(87) International publication number: WO 2021/131636

(57) **Abstract**

The present invention aims to provide a method that enables efficient production of a dealcoholized beverage having the aroma and taste of an alcohol-containing beverage as well as a reduced ethanol concentration, and a method that enables efficient production of an aroma component from an alcohol-containing beverage, the aroma component being capable of imparting the aroma and taste of the alcohol-containing beverage to a beverage or the like into which the aroma component is mixed, while suppressing an increase in ethanol concentration in the beverage or the like. The method of producing a dealcoholized beverage, the method including the steps of: (A) separating ethanol and an aroma component from an alcohol-containing beverage to obtain a mixture containing the ethanol and the aroma component and a residual liquid which remains after the separation of the ethanol and the aroma component from the alcohol-containing beverage; (B) bringing a resin into contact with the mixture containing the ethanol and the aroma component to cause the resin to adsorb the aroma component; (C) removing the ethanol from the resin having adsorbed the aroma component; (D) recovering the aroma component from the resin from which the ethanol was removed in the step (C); and (E) mixing the residual liquid obtained in the step (A) with the aroma component obtained in the step (D) to obtain a dealcoholized beverage.

## Description

### TECHNICAL FIELD

The present invention relates to a method of producing a dealcoholized beverage having a reduced ethanol concentration from an alcohol-containing beverage. The present invention also relates to a method of producing an alcoholic beverage. The present invention further relates to a method of producing an aroma component from an alcohol-containing beverage.

### BACKGROUND ART

Recent years have witnessed an increase in demand for alcohol-taste beverages containing substantially no alcohol (non-alcoholic beverages). Non-alcoholic beverages that are for sale include non-alcoholic beer-taste beverages and non-alcoholic wines, for example.

Non-alcoholic beverages are required to have the aroma and taste of alcoholic beverages, with only the ethanol concentration being reduced. For example, non-alcoholic beer is producible by obtaining a treated solution having a reduced ethanol concentration through steam distillation of beer for separation of ethanol and aroma components, and adding a distillate containing the separated ethanol and aroma components to the treated solution. However, since the distillate contains ethanol together with the aroma components, the addition of the distillate increases the ethanol concentration in the treated solution.

Patent Literature 1 describes a method of producing deethanolated wine, including separating an aroma component from wine; separating ethanol from the wine from which the aroma component was separated in the separating of an aroma component; and adding the aroma component separated in the separating of an aroma component to the wine having undergone the separating of ethanol, to add an aroma to the wine. In the method of Patent Literature 1, the adding of an aroma component follows separating ethanol, present together with the aroma component separated in the separating of an aroma component, through a membrane such as a reverse osmosis membrane (RO membrane).

### CITATION LIST

### - Patent Literature

Patent Literature 1: JP 2014-176367 A

### SUMMARY OF INVENTION

### - Technical Problem

In the method of Patent Literature 1, ethanol present together with the aroma component is separated from the aroma component through a membrane such as an RO membrane. However, as it takes time to separate ethanol by RO membrane treatment, the efficiency of the method can still be increased. The recovery rate of an aroma component in the method of Patent Literature 1 can also still be increased.

The present invention aims to provide a method that enables efficient production of a dealcoholized beverage having the aroma and taste of an alcohol-containing beverage as well as a reduced ethanol concentration. The present invention also aims to provide a method that enables efficient production of an aroma component from an alcohol-containing beverage, the aroma component being capable of imparting the aroma and taste of the alcohol-containing beverage to a beverage or the like when mixed therewith, while suppressing an increase in ethanol concentration in the beverage or the like.

### - Solution to Problem

As a result of extensive studies to solve the above issue, the present inventor found that when a mixture containing ethanol and an aroma component separated from an alcohol-containing beverage is treated with a resin that adsorbs the aroma component, the aroma component and the ethanol can be favorably separated from each other, so that the aroma component can be efficiently recovered from the alcohol-containing beverage at a high recovery rate. When the aroma component separated as described above is mixed with the residual liquid which remains after the separation of the ethanol from the alcohol-containing beverage, the aroma component can impart the aroma and taste of the alcohol-containing beverage to the residual liquid while suppressing an increase in ethanol concentration in the residual liquid. Thus, a dealcoholized beverage can be produced which has the aroma and taste as well as a reduced ethanol concentration.

In other words, the present invention relates to the following method of producing a dealcoholized beverage, method of producing an alcoholic beverage, method of producing an aroma component from an alcohol-containing beverage, and the like.
(1) A method of producing a dealcoholized beverage, the method including the steps of: (A) separating ethanol and an aroma component from an alcohol-containing beverage to obtain a mixture containing the ethanol and the aroma component and a residual liquid which remains after the separation of the ethanol and the aroma component from the alcohol-containing beverage; (B) bringing a resin into contact with the mixture containing the ethanol and the aroma component to cause the resin to adsorb the aroma component; (C) removing the ethanol from the resin having adsorbed the aroma component; (D) recovering the aroma component from the resin from which the ethanol was removed in the step (C); and (E) mixing the residual liquid obtained in the step (A) with the aroma component obtained in the step (D) to obtain a dealcoholized beverage.
(2) The method of producing a dealcoholized beverage according to (1) above, wherein the alcohol-containing beverage has an ethanol concentration of 0.1 to 60 v/v%.
(3) The method of producing a dealcoholized beverage according to (1) or (2) above, wherein the alcohol-containing beverage is at least one of a brewed alcoholic drink or a distilled alcoholic drink each being made from at least one of a fruit or grain.
(4) The method of producing a dealcoholized beverage according to any one of (1) to (3) above, wherein the alcohol-containing beverage is beer, a fruit wine, or sake.
(5) The method of producing a dealcoholized beverage according to any one of (1) to (4) above, wherein the alcohol-containing beverage is beer.
(6) The method of producing a dealcoholized beverage according to any one of (1) to (5) above, wherein the dealcoholized beverage obtained in the step (E) has an ethanol concentration of lower than 0.005 v/v%.
(7) The method of producing a dealcoholized beverage according to any one of (1) to (6) above, wherein the resin is a styrene-based resin.
(8) The method of producing a dealcoholized beverage according to any one of (1) to (7) above, wherein in the step (C), the ethanol is removed by washing the resin having adsorbed the aroma component with water.
(9) The method of producing a dealcoholized beverage according to any one of (1) to (8) above, wherein in the step (D), the aroma component is recovered by eluting the aroma component from the resin with steam.
(10) A method of producing an alcoholic beverage using a dealcoholized beverage produced by the production method according to any one of (1) to (9) above, the method including mixing the dealcoholized beverage and ethanol to adjust the ethanol concentration in the alcoholic beverage.
(11) A method of producing an aroma component from an alcohol-containing beverage, the method including the steps of: (A) separating ethanol and an aroma component from an alcohol-containing beverage to obtain a mixture containing the ethanol and the aroma component and a residual liquid which remains after the separation of the ethanol and the aroma component from the alcohol-containing beverage; (B) bringing a resin into contact with the mixture containing the ethanol and the aroma component to cause the resin to adsorb the aroma component; (C) removing the ethanol from the resin having adsorbed the aroma component; and (D) recovering the aroma component from the resin from which the ethanol was removed in the step (C).

### - Advantageous Effects of Invention

The present invention can provide a method that enables efficient production of a dealcoholized beverage having the aroma and taste of an alcohol-containing beverage as well as a reduced ethanol concentration. The present invention can also provide a method that enables efficient production of an aroma component from an alcohol-containing beverage, the aroma component being capable of imparting the aroma and taste of the alcohol-containing beverage to a beverage or the like when mixed therewith, while suppressing an increase in ethanol concentration in the beverage or the like.

### BRIEF DESCRIPTION OF DRAWINGS

FIG. 1 is a process chart of an example of the method of producing a dealcoholized beverage of the present invention.
FIG. 2 is a process chart of an example of the method of producing an aroma component from an alcohol-containing beverage of the present invention.
FIG. 3 is a view of the flow scheme of a separation test using an RO membrane.

### DESCRIPTION OF EMBODIMENTS

The method of producing a dealcoholized beverage of the present invention includes the steps of: (A) separating ethanol and an aroma component from an alcohol-containing beverage to obtain a mixture containing the ethanol and the aroma component and a residual liquid which remains after the separation of the ethanol and the aroma component from the alcohol-containing beverage; (B) bringing a resin into contact with the mixture containing the ethanol and the aroma component to cause the resin to adsorb the aroma component; (C) removing the ethanol from the resin having adsorbed the aroma component; (D) recovering the aroma component from the resin from which the ethanol was removed in the step (C); and (E) mixing the residual liquid obtained in the step (A) with the aroma component obtained in the step (D) to obtain a dealcoholized beverage.

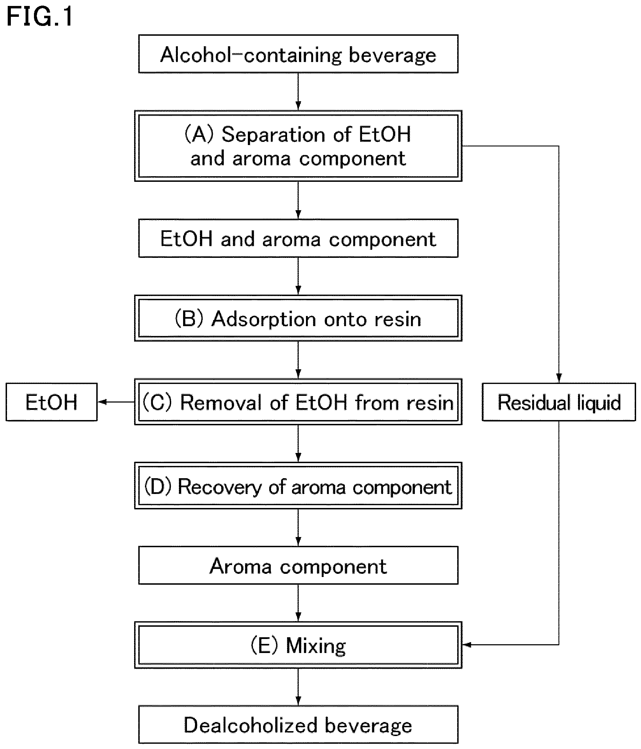

FIG. 1 is a process chart of an example of the method of producing a dealcoholized beverage of the present invention. EtOH in the figure indicates ethanol.

The method of producing a dealcoholized beverage of the present invention may include a step(s) in addition to the steps (A) to (E) as long as the effects of the present invention are not impaired.

In the production method of the present invention, an alcohol-containing beverage can be used as a raw material to produce a dealcoholized beverage having a lower ethanol concentration than the alcohol-containing beverage.

The alcohol-containing beverage in the present invention is a beverage containing ethanol and has an ethanol concentration of typically 0.1 v/v% or higher, preferably 0.5 v/v% or higher, more preferably 1 v/v% or higher, particularly preferably 3 v/v% or higher. The alcohol-containing beverage has an ethanol concentration of preferably 60 v/v% or lower, more preferably 15 v/v% or lower, still more preferably 10 v/v% or lower. Any of the upper limits above can be combined with any of the lower limits above to define the range. In one embodiment, the alcohol-containing beverage has an ethanol concentration of preferably 0.1 to 60 v/v%, more preferably 0.1 to 15 v/v%, still more preferably 0.5 to 10 v/v%, even more preferably 1 to 10 v/v%, particularly preferably 3 to 10 v/v%. When an alcohol-containing beverage having an ethanol concentration falling within any of the ranges above is used, the effects of the present invention described above can be better exhibited.

The ethanol concentration can be measured by analysis using a gas chromatograph mass spectrometer (GC/MS). The measurement conditions for GC/MS can be the conditions described in EXAMPLES.

The alcohol-containing beverage is preferably at least one of a brewed alcoholic drink or a distilled alcoholic drink, more preferably a brewed alcoholic drink. The alcohol-containing beverage is preferably made from at least one of a fruit or grain. The brewed alcoholic drink is preferably made from at least one of a fruit or grain. Examples include beer, beer-based beverages (beer-taste beverages) such as low-malt beer, sake (Japanese rice wine), Shaoxing wine (Chinese wine), and fruit wines. Examples of the fruit wines include wine made from fermented grapes; a fruit wine made from fermented peaches, strawberries, pears, satsuma oranges (*Citrus unshiu*)*,* or the like; and cider. Preferred is wine made from fermented grapes. The brewed alcoholic drink preferably has an ethanol concentration of 0.1 to 15 v/v%. Examples of the distilled alcoholic drink include whiskey, brandy, and shochu. The alcohol-containing beverage is more preferably beer, a fruit wine, or sake, still more preferably beer. The method of producing a dealcoholized beverage of the present invention is suitable as a method of producing dealcoholized beer. Beer preferably has an ethanol concentration of 3 to 10 v/v%.

In the step (A), ethanol and an aroma component are separated from an alcohol-containing beverage to obtain a mixture containing the ethanol and the aroma component and a residual liquid which remains after the separation of the ethanol and the aroma component from the alcohol-containing beverage.

The ethanol and the aroma component may be separated from the alcohol-containing beverage by any method. Examples include distillation such as vacuum steam distillation and vacuum distillation. In one embodiment of the present invention, an alcohol-containing beverage is subjected to vacuum steam distillation or vacuum distillation, so that ethanol and an aroma component are separated from the beverage. Thus, a distillate (condensate) containing the ethanol and the aroma component and a residual liquid which remains after the separation of the ethanol and the aroma component from the alcohol-containing beverage can be obtained. Preferably, the separation is performed by vacuum steam distillation.

Vacuum steam distillation can lower the boiling point of the alcohol-containing beverage, thus efficiently distilling the ethanol and the aroma component from the alcohol-containing beverage. For vacuum steam distillation, a distillation apparatus such as a common steam distillation apparatus or a spinning separator (continuous countercurrent gas-liquid extraction apparatus) including a spinning cone column can be used.

When the separation is performed by vacuum steam distillation, an alcohol-containing beverage supplied to a distillation apparatus can be subjected to distillation. Vacuum steam distillation is enabled by setting the temperature and pressure (atmospheric pressure) in the distillation apparatus. The pressure in the apparatus during vacuum steam distillation may be any pressure lower than the atmospheric pressure (0.1 MPa), and is preferably 0.02 MPa or lower, more preferably 0.013 MPa or lower, still more preferably 0.0123 MPa or lower. The pressure is also preferably 0.0025 MPa or higher, more preferably 0.004 MPa or higher, still more preferably 0.006 MPa or higher, particularly preferably 0.0066 MPa or higher. In one embodiment, the pressure in the apparatus during vacuum steam distillation is preferably 0.0025 to 0.02 MPa, more preferably 0.004 to 0.013 MPa, still more preferably 0.006 to 0.013 MPa, particularly preferably 0.0066 to 0.0123 MPa.

When the temperature of the alcohol-containing beverage becomes high in the step (A), the aroma and taste of the residual liquid change due to the heat. This may impair the original flavor of the alcohol-containing beverage. From this viewpoint, in the step (A), the separation is performed at a temperature of preferably 60°C or lower, more preferably 50°C or lower, still more preferably 47°C or lower. Also, in order to efficiently separate the ethanol and the aroma component from the alcohol-containing beverage, the temperature during the separation is preferably 25°C or higher, more preferably 30°C or higher, still more preferably 40°C or higher, particularly preferably 43°C or higher. In one embodiment, the separation is performed at preferably 25°C to 60°C, more preferably 30°C to 60°C, still more preferably 40°C to 60°C, even more preferably 40°C to 50°C, particularly preferably 43°C to 50°C, most preferably 43°C to 47°C.

For example, when the separation is performed by vacuum steam distillation, the temperature of the steam is preferably 60°C or lower, more preferably 50°C or lower, still more preferably 47°C or lower. The temperature of the steam is also preferably 25°C or higher, more preferably 30°C or higher, still more preferably 40°C or higher, particularly preferably 43°C or higher. In one embodiment, the temperature of the steam during vacuum steam distillation in the step (A) is preferably 25°C to 60°C, more preferably 30°C to 60°C, still more preferably 40°C to 60°C, even more preferably 40°C to 50°C, particularly preferably 43°C to 50°C, most preferably 43°C to 47°C.

In one embodiment, the pressure and the temperature in the apparatus during vacuum steam distillation are preferably a pressure of 0.0025 to 0.02 MPa and a temperature of 25°C to 60°C, more preferably a pressure of 0.004 to 0.013 MPa and a temperature of 30°C to 50°C, still more preferably a pressure of 0.006 to 0.013 MPa and a temperature of 40°C to 50°C, particularly preferably a pressure of 0.0066 to 0.0123 MPa and a temperature of 43°C to 50°C.

The duration for vacuum steam distillation or vacuum distillation is not particularly limited, and can be set as appropriate according to the ethanol concentration in the residual liquid and the like.

In the step (A), the mixture containing the ethanol and the aroma component separated from the alcohol-containing beverage used as a raw material and the residual liquid which remains after the separation of the ethanol and the aroma component from the alcohol-containing beverage are obtained. The mixture is preferably a liquid in terms of workability in the step (B) described later. For example, when vacuum steam distillation or vacuum distillation is performed, the extracted ethanol and aroma component are condensed by cooling to obtain the mixture containing the ethanol and the aroma component as a distillate. The residual liquid obtained in the step (A) has a lower ethanol concentration and a lower aroma component concentration than the alcohol-containing beverage used. The residual liquid is not necessarily one from which the ethanol and the aroma component contained in the alcohol-containing beverage used as a raw material have been completely separated (removed). The residual liquid may thus contain ethanol and/or the aroma component.

The residual liquid obtained by separating the ethanol and the aroma component from the alcohol-containing beverage can be used directly in production of a dealcoholized beverage or can be optionally diluted with water or the like before it is used in production of a dealcoholized beverage. In terms of the aroma and taste, the residual liquid is preferably used without dilution. The residual liquid which remains after the separation of the ethanol and the aroma component from the alcohol-containing beverage in the step (A) may have any ethanol concentration lower than that of the alcohol-containing beverage used as a raw material. The residual liquid has an ethanol concentration of preferably 0.5 v/v% or lower, preferably lower than 0.5 v/v%, more preferably lower than 0.1 v/v%, still more preferably 0.05 v/v% or lower, even more preferably 0.01 v/v% or lower, particularly preferably lower than 0.005 v/v%, most preferably 0.001 v/v% or lower. The residual liquid may have an ethanol concentration of 0.000 v/v% or higher. The ethanol and the aroma component are preferably separated from the alcohol-containing beverage such that the ethanol concentration in the residual liquid falls within any of the ranges above. When vacuum steam distillation or vacuum distillation is performed to separate the ethanol and the aroma component, the distillation is preferably performed until the ethanol concentration in the residual liquid reaches a value falling within any of the ranges above.

In the step (B), a resin is brought into contact with the mixture containing the ethanol and the aroma component to cause the resin to adsorb the aroma component.

The resin may be any resin that adsorbs the aroma component above, preferably an adsorptive resin. Examples of the adsorptive resin include synthetic adsorptive resins such as aromatic resins (for example, styrene-based resins (e.g., styrene-divinylbenzene copolymer)) and methacrylate-based resins. A preferred example of the synthetic adsorptive resins is a porous styrene-based resin having a specific surface area of 500 m²/g or more. In particular, the adsorptive resin is preferably a styrene-based resin, more preferably a porous styrene-based, hydrophobic synthetic adsorptive resin having no ion exchange group or a porous styrene-based, hydrophilic adsorptive resin having a few ion exchange groups. The adsorptive resin may be, for example, Muromac^{®} SAP9121 or SAP9210 (both available from Muromachi Chemical Co., Ltd.).

The treatment method used to cause the resin to adsorb the mixture containing the ethanol and the aroma component may be either a batch method or a column method. In terms of workability, the column method is preferred. In the case of adsorption by the column method, for example, the mixture containing the ethanol and the aroma component is passed through a column filled with the resin as described above to cause the resin to adsorb the aroma component. In the case where the mixture containing the ethanol and the aroma component is a liquid, the mixture having a volume that is preferably 3 to 5 times the resin is passed through the column to cause the resin to adsorb the aroma component. In order to increase the adsorption rate of the aroma component, the mixture can be passed multiple times. In the case of the batch method, the mixture and the resin are stirred in a container, so that the resin can adsorb the aroma component.

In the step (C), the ethanol is removed from the resin having adsorbed the aroma component.

Ethanol can be removed from a resin by washing a resin having adsorbed an aroma component with water. In the present invention, the ethanol is preferably removed from the resin by washing the resin having adsorbed the aroma component with water. When the resin is washed with water, the ethanol can be removed from the resin without elution of the aroma component. For washing with water, the resin having adsorbed the aroma component may be brought into contact with water. When the aroma component is adsorbed by the column method, water may be passed through the column filled with the resin. For example, it is preferable to pass water having a volume that is preferably 5 times or more, more preferably 10 times or more, still more preferably 10 to 50 times the resin. The temperature of water is preferably 25°C or lower, more preferably 20°C or lower. For example, the temperature is preferably 5°C to 25°C, more preferably 5°C to 20°C. When the temperature of water falls within any of the ranges above, the recovery rate of the aroma component is further increased. In order to more sufficiently remove the ethanol, the washing is preferably followed by removal of as much water used for the washing as possible from the resin.

In the step (D), the aroma component is recovered from the resin from which the ethanol was removed in the step (C). The aroma component can be recovered by eluting the aroma component from the resin. In one embodiment of the present invention, the aroma component is preferably recovered by eluting the aroma component from the resin with steam. Use of steam is preferred because it gives a high recovery rate of the aroma component and suppresses an increase in the ethanol concentration in the resulting aroma component.

A solution containing the aroma component can be obtained by bringing steam into contact with the resin to elute the aroma component, recovering steam containing the aroma component, and condensing the steam. When a column is used, the solution containing the aroma component can be recovered by passing steam through the column filled with the resin and condensing the steam eluted from the column. The steam is preferably saturated steam. For efficient elution of the aroma component, the temperature of the steam is preferably 100°C or higher. For suppression of changes in the aroma component, the temperature of the steam is preferably 140°C or lower, more preferably 130°C or lower. In one embodiment, the temperature of the steam is preferably 100°C to 140°C, more preferably 100°C to 130°C. The pressure of the steam is preferably 0.1 MPa or more, more preferably 0.1 to 0.4 MPa, still more preferably 0.1 to 0.3 MPa in terms of gauge pressure. In one embodiment, saturated steam having a pressure falling within any of the ranges above is preferred.

The solution containing the aroma component and water obtained above can be used directly in the step (E), or can optionally be concentrated to increase the concentration of the aroma component or diluted prior to the step (E). The concentration method may be any method such as a concentration method using a reverse osmosis membrane (RO membrane) or a method using vacuum distillation.

The aroma component recovered in the step (D) is an aroma component that is derived from the alcohol-containing beverage used as a raw material and can impart the aroma and taste of the alcohol-containing beverage to a beverage or the like when mixed therewith. In the present invention, the aroma component and the ethanol are separated by the treatment using the resin described above, so that the aroma component containing substantially no ethanol can be efficiently obtained. The expression "containing substantially no ethanol" means that the ethanol concentration is lower than 0.100 v/v%, preferably 0.05 v/v% or lower. Also, use of the resin above for separation of an aroma component and ethanol enables a high recovery rate of the aroma component.

In the step (E), the aroma component obtained above and the residual liquid obtained in the step (A) are mixed to obtain a dealcoholized beverage. The amount of the aroma component to be mixed is not particularly limited and may be selected as appropriate from the whole amount recovered in the step (D) and part of the amount. Even when the aroma component obtained in the step (D) is mixed with the residual liquid, the ethanol concentration hardly increases with the mixing of the aroma component. Thus, a dealcoholized beverage can be produced which has a reduced ethanol concentration as well as the aroma and taste of the alcohol-containing beverage used as a raw material.

The ethanol concentration in the dealcoholized beverage obtained in the step (E) is preferably 0.01 v/v% or lower, more preferably 0.005 v/v% or lower, still more preferably lower than 0.005 v/v%. According to the production method of the present invention, a dealcoholized beverage can be produced which has an ethanol concentration reduced to the above range. The dealcoholized beverage can also be referred to as a low-alcohol beverage.

According to the present invention, a dealcoholized beverage can be produced which contains the aroma and taste components of the alcohol-containing beverage used as a raw material and has a reduced ethanol concentration.

The dealcoholized beverage obtained by the present invention is a beverage that contains a residual liquid which remains after separation of ethanol from an alcohol-containing beverage used as a raw material and has an ethanol concentration reduced preferably to lower than 0.005 v/v%. The dealcoholized beverage also contains the aroma component in the raw material, thus having the aroma and taste of the alcohol-containing beverage that were present before the ethanol separation. The method of producing a dealcoholized beverage of the present invention is especially suitable for beer, fruit wine, and sake, particularly for reduction of ethanol in beer. In a preferred embodiment of the present invention, for example, when beer is used as a raw material, dealcoholized beer can be produced which has the original aroma and taste of beer and an ethanol concentration of lower than 0.005 v/v%.

Examples of the aroma component contained in an alcohol-containing beverage, for example in the case of beer, include acetaldehyde, ethyl acetate, i-butanol, isoamyl acetate, and isoamyl alcohol. According to one embodiment of the present invention, dealcoholized beer can be produced from beer, wherein the amount of one or more compounds selected from the group consisting of acetaldehyde, ethyl acetate, i-butanol, isoamyl acetate, and isoamyl alcohol in the dealcoholized beer is preferably 50% or more, more preferably 70% or more of the amount (100%) thereof in the beer used as the raw material.

The dealcoholized beverage obtained by the production method of the present invention is suitably drinkable as a beverage as is. Also, an alcoholic beverage (alcohol-containing beverage) having a desired ethanol concentration can be produced by mixing the dealcoholized beverage obtained by the production method of the present invention with ethanol to adjust the ethanol concentration in the alcoholic beverage. A method of producing an alcoholic beverage including mixing a dealcoholized beverage produced by the production method of the present invention with ethanol to adjust the ethanol concentration as described above is also one embodiment of the present invention. Any alcohol-containing beverage containing ethanol can also be used for the addition of ethanol.

The present invention also encompasses a method of producing an aroma component from an alcohol-containing beverage (hereinafter, the method is also simply referred to as a method of producing an aroma component).

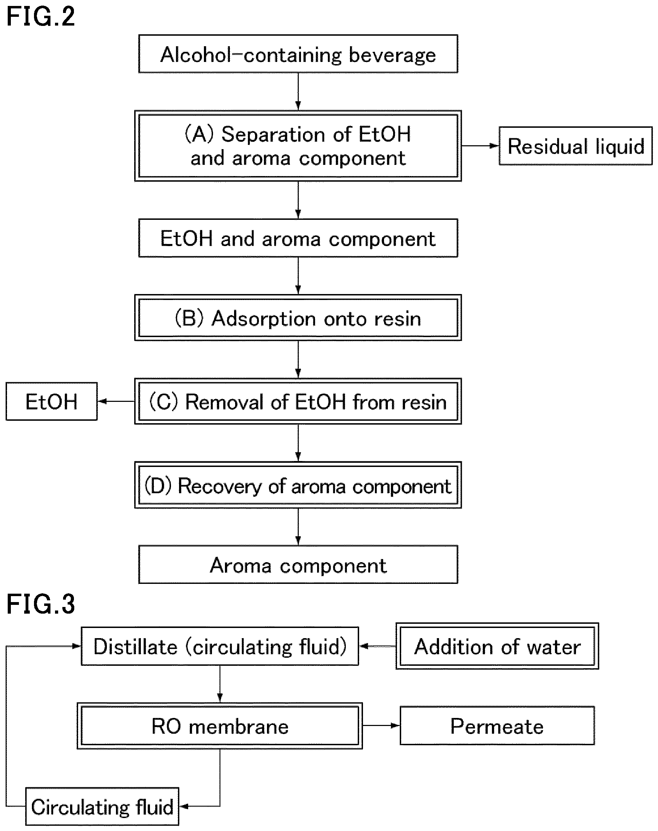

The method of producing an aroma component from an alcohol-containing beverage of the present invention includes the steps of: (A) separating ethanol and an aroma component from an alcohol-containing beverage to obtain a mixture containing the ethanol and the aroma component and a residual liquid which remains after the separation of the ethanol and the aroma component from the alcohol-containing beverage; (B) bringing a resin into contact with the mixture containing the ethanol and the aroma component to cause the resin to adsorb the aroma component; (C) removing the ethanol from the resin having adsorbed the aroma component; and (D) recovering the aroma component from the resin from which the ethanol was removed in the step (C). FIG. 2 is a process chart of an example of the method of producing an aroma component from an alcohol-containing beverage of the present invention. The steps (A) to (D) in the method of producing an aroma component of the present invention and preferred embodiments thereof are the same as the steps (A) to (D) in the method of producing a dealcoholized beverage of the present invention and preferred embodiments thereof described above. The method of producing an aroma component of the present invention may include a step(s) other than the steps (A) to (D) as long as the effects of the present invention are not impaired. The aroma component obtained by the production method of the present invention and preferred embodiments thereof are the same as the aroma component obtained in the above-mentioned method of producing a dealcoholized beverage and preferred embodiments thereof. The aroma component obtained by the production method of the present invention is an aroma component derived from an alcohol-containing beverage used as a raw material, and can impart the aroma and taste of the alcohol-containing beverage to a beverage or the like when mixed therewith.

The alcohol-containing beverage used in the method of producing an aroma component of the present invention and preferred embodiments thereof are the same as the alcohol-containing beverage used in the method of producing a dealcoholized beverage and preferred embodiments thereof described above. For example, when beer is used as an alcohol-containing beverage, an aroma component (also referred to as an aroma component composition) can be obtained which contains one or more compounds selected from acetaldehyde, ethyl acetate, i-butanol, isoamyl acetate, and isoamyl alcohol.

### EXAMPLES

The following shows examples that more specifically describe the present invention. The present invention is not limited to these examples.

In the following examples, Alc (%) means an ethanol content (concentration) (v/v%). The ethanol content was measured by the following method.

### <Method of measuring ethanol content>

The ethanol content of samples such as a dealcoholized sample and a distillate (condensate) which were obtained from an alcoholic beverage was measured by GC/MS (product name: 6890 series GC system, 5973 Network Mass Selective Detector, available from Agilent Technologies). The measurement samples were analyzed by adding an internal standard (acetone) without pretreatment. The measurement conditions for GC/MS are as follows. A calibration curve was prepared according to the ethanol concentrations in the samples at the same order of magnitude. The calibration curve was used for quantification. For example, for measurement of a sample with an ethanol concentration of 0.005%, a calibration curve was prepared using 5 points (at least 3 points) between 0.001% and 0.01%.
Column: GL Science InterCap Pure-WAX + T.L. (length: 60 m, inner diameter: 250 µm, membrane thickness: 0.25 µm)
Gas flow rate: 2.8 mL/min, average linear velocity: 43 cm/sec
Temperature rise: 50°C (15 minutes) → 240°C (temperature rise at 120°C/min) → 250°C (5 minutes)
Injection: 0.2 µL
Split ratio: 50:1
Number of measurements: n = 2 (two same samples)

### <Method of measuring low volatile compounds (LVC)>

The LVC analysis was performed by GC (product name: GC2010, available from Shimadzu Corporation) under the following measurement conditions.
GC conditions
Column: DB-WAX (inner diameter 0.53 mm, length 30 m, membrane thickness 1 µm) (available from Agilent Technologies)
Gas flow rate: helium 25 Psi, hydrogen 47 mL/min, air 400 mL/min
Temperature rise: 40°C (5 minutes) → 140°C (temperature rise at 40°C/min) → 140°C (1 minute)
Detector: FID
Detector temperature: 200°C
Sampling rate: 40 msec
End time: 11 minutes

### Headspace Sampler Conditions

Temperature: needle (180°C), transfer (180°C), oven (40°C)
Timing: pressurization (10 minutes), injection (0.08 minutes), withdrawal (0.2 minutes), oven (36 minutes), PII (18 minutes), cycle time (18 minutes)
Carrier: 25 Psi
Injection method: full injection

The amounts of typical aroma components produced through fermentation, namely acetaldehyde, ethyl acetate, i-butanol, isoamyl acetate, and isoamyl alcohol, were measured as the LVC contents.

### <Reference Example 1>

### Dealcoholization by vacuum steam distillation

### 1. Raw material and equipment

The raw materials used were commercially available beer (Alc 5.5%, hereinafter referred to as Beer A) and commercially available non-alcoholic beer (non-alcoholic beer made in a foreign country (country other than Japan), Alc 0.5%, hereinafter referred to as Non-Alcoholic Beer B)). Vacuum steam distillation was carried out using a continuous countercurrent gas-liquid extraction apparatus.

### 2. Examination on steam distillation conditions

Vacuum steam distillation of each raw material was performed in the apparatus above. The ethanol concentration in the residual liquid (dealcoholized sample) remaining after the distillation was measured.

In the case of dealcoholization by steam distillation, the amount of steam relative to the amount of the alcohol-containing beverage was found to be an important parameter. Thus, the number of treatments to vary the amount of steam relative to the amount of beer, the raw material feed flow rate, and the steam temperature were set as parameters. The relationship between each parameter and dealcoholization was examined.

### 2.1 Effect of number of treatments on dealcoholization

The number of vacuum steam distillation treatments was varied to examine the effect of varying the duration of the vacuum steam distillation.

In the case of performing multiple treatments, the vacuum was released only at the bottom of the column after the first treatment, and then the recovered dealcoholized sample was applied to the top of the column again. The conditions for vacuum steam distillation are shown in Conditions 1 below. The column wall surface temperature and the column bottom temperature were set higher than the steam temperature because the steam condenses on the column wall surface and the column bottom if the temperatures were the same. The duration of the vacuum steam distillation can also be varied by varying the length of the column.

### <Conditions 1>

Raw material: Beer A
Total raw material feed amount: 300 mL
Raw material feed flow rate: 30 mL/min
Column wall surface temperature: 45°C
Column bottom temperature: 50°C
Temperature inside flask for steam generation: 50°C
Steam temperature: 40°C
Pressure inside column (absolute pressure): 0.0066 MPa

Table 1 shows the ethanol concentration in the dealcoholized sample when the number of treatments was varied. The duration of each vacuum steam distillation treatment was 10 minutes. After three times of treatments, the ethanol concentration was 0.001 v/v%.

**[Table 1]**

| | | | | | |
|---|---|---|---|---|---|
| Number of treatments (times) | 0 | 1 | 2 | 3 | 4 |
| Alc (%) | 5.926 | 0.369 | 0.012 | 0.001 | 0.000 |

### 2.2 Effect of steam temperature on dealcoholization

The effect of the steam temperature on the ethanol concentration in the dealcoholized sample was examined. Since the steam density increases as the steam temperature rises, the amount of steam relative to beer can be varied. The conditions for vacuum steam distillation are shown in Conditions 2 below. The number of treatments was one. Table 2 shows the ethanol concentration in the dealcoholized sample when the steam temperature was varied.

### <Conditions 2>

Raw material: Beer A
Total raw material feed amount: 300 mL
Raw material feed flow rate: 30 mL/min
Column wall surface temperature: 45°C, 55°C, or 65°C (set according to steam temperature)
Column bottom temperature: 55°C or 65°C (set according to steam temperature)
Temperature inside flask for steam generation: 50°C, 60°C, or 70°C (set according to steam temperature)
Steam temperature: 40°C, 50°C, or 60°C
Pressure inside column (absolute pressure): 0.0066 MPa, 0.0123 MPa, or 0.0199 MPa (set according to steam temperature)

**[Table 2]**

| | | | |
|---|---|---|---|
| Steam temperature (°C) | 40 | 50 | 60 |
| Alc (%) | 0.515 | 0.142 | 0.085 |

### 2.3 Effect of difference in feed amount and alcohol content of raw materials on dealcoholization

The effect of the ethanol concentration in the raw material and the like on the ethanol concentration in a sample after dealcoholization was examined. The conditions for vacuum steam distillation are shown in Conditions 3 below. The number of treatments was one. Table 3 shows the results.

### <Conditions 3>

Raw material: Beer A (Alc 5.5%), Non-Alcoholic Beer B (Alc 0.5%)
Total raw material feed amount: 300 mL
Raw material feed flow rate: 30 mL/min, 20 mL/min, or 10 mL/min
Column wall surface temperature: 45°C
Column bottom temperature: 50°C
Temperature inside flask for steam generation: 50°C
Steam temperature: 44°C
Pressure inside column (absolute pressure): 0.0066 MPa

**[Table 3]**

| | | | |
|---|---|---|---|
| Raw material feed flow rate (mL/min) | 10 | 20 | 30 |
| Beer A Alc (%) | 0.008 | 0.025 | 0.515 |
| Non-Alcoholic Beer B Alc (%) | 0.0043 | 0.009 | 0.0495 |

### <Example 1>

### Examination on technique of separating alcohol and aroma from distillate

Beet A was subjected to vacuum distillation (using an evaporator), so that a beer distillate (ethanol concentration: 12 v/v%) containing ethanol and aroma components was obtained. The conditions for vacuum distillation were as follows. Beer A was the same as that used in Reference Example 1.
Temperature: 30°C
Absolute pressure: 0.0027 MPa
Degree of concentration: vacuum distillation was performed until 500 mL of Beer A was reduced to 300 mL (until 200 mL of a distillate was obtained from 500 mL of Beer A).

A method of separating aroma components and ethanol using an adsorptive resin was examined. For recovery of aroma components from a distillate using an adsorptive resin, Muromac^{®} SAP9121 and SAP9210 (both available from Muromachi Chemical Co., Ltd.) were used. These are styrene-based resins. These resins adsorb and desorb components based on an adsorption principle that makes use of van der Waals force. Applying energy higher than the van der Waals force acting between the resin and the components enables desorption of the components.

Each resin was swollen and washed before use as with common resins. Then, a column was filled with 400 mL of the resin and 1450 mL of the beer distillate obtained above was passed through the column to cause the resin to adsorb the aroma components. The distillate was passed 5 times in order to increase the adsorption rate of the aroma components. Then, 4000 mL of purified water (20°C) was passed to remove the ethanol remaining in the column. After the washing, purified water remaining in the column was drained as much as possible. The aroma components were then recovered using steam. Steam was passed through the column to elute the aroma components from the resin. The aroma components were recovered using steam of 100°C or higher at a steam pressure of 0.2 MPa (gauge pressure). The steam was condensed by a condenser installed at the outlet of the column and recovered as an aroma solution. At the time of recovery, a 500-mL fraction of the aroma solution was recovered at each time, so that a total of 8 L of the aroma solution was recovered. The ethanol concentrations in Fractions 1 to 16 were measured.

Table 4 shows the ethanol concentrations in Fractions 1 to 16 obtained using Muromac^{®} SAP9121. Fraction 2 and the subsequent fractions had an ethanol concentration of 0.002 v/v% or lower. Also in the case of using Muromac^{®} SAP9120, Fraction 2 and the subsequent fractions had an ethanol concentration of 0.002 v/v% or lower.

**[Table 4]**

| Fr. No. | 1 | 2 | 3-5 | 6-16 |
|---|---|---|---|---|
| Alc (%) | 0.174 | 0.002 | 0.001 | 0.000 |

In addition, the low volatile compound (LVC) contents in the aroma solution (solution as a mixture of Fractions 1 to 16) were analyzed to determine the recovery rates (%) thereof from the raw material. The recovery rates each are the proportion (%) of a LVC in the aroma solution when the amount of the LVC in the raw material is taken as 100%. The recovery rates were higher when Muromac^{®} SAP9121 was used than when SAP9120 was used. Table 5 shows the recovery rates of the aroma components when Muromac^{®} SAP9121 was used.

### <Comparative Example 1>

Ethanol was separated from the beer distillate produced in Example 1 using an RO membrane.

The apparatus used was a flat membrane apparatus available from Alfa Laval AB. The RO membrane used was GE FLAT SHEET AG (12 × 12) (effective filtration area per sheet: 0.018125 m²) available from GE Healthcare. FIG. 3 is a view of the flow scheme of a separation test using an RO membrane. The RO membrane used selectively allows ethanol and water to pass therethrough. A permeate having passed through the RO membrane contains ethanol and water, as well as certain amounts of aroma components.

The separation conditions using the RO membrane are as follows. Water was added to the beer distillate to increase the volume at the start of the separation. Analysis results of the sample to which water was added were used to evaluate the recovery rates and the like. Beer distillate: 2647 mL (water was added to 18900 g before the start)
Ethanol concentration: 12 v/v% before addition of water, 1.34 v/v% after addition of water
Flow rate: 5 mL/min
Gauge pressure in apparatus: 2.4 to 3.0 MPa

RO membrane separation requires a long period of time. Thus, the test was performed while the inlet of the apparatus was cooled with 2°C cold water and the circulating fluid was cooled with ice. The separation was performed for 8.6 hours until the ethanol content in the circulating fluid reached 0 v/v% while water was added as needed since the circulating fluid reduces as the separation proceeds. When the ethanol content in the circulating fluid reached 0 v/v%, addition of water was stopped. The fluid was concentrated as much as possible, so that as much the circulating fluid as possible was recovered. The ethanol content in the sample after the end of the test was measured by GC/MS. Meanwhile, the ethanol content in the circulating fluid was measured with a density meter available from Anton Paar GmbH because it cannot be measured by GC/MS during the test. The low volatile compound contents in the recovered circulating fluid were analyzed, and the recovery rates (%) thereof from the raw material were determined. Table 5 shows the results.

**[Table 5]**

| | Acetaldehyde | Ethyl acetate | i-Butanol | Isoamyl acetate | Isoamyl alcohol |
|---|---|---|---|---|---|
| Example 1 | 100% | 72% | 93% | 72% | 94% |
| Comparative Example 1 | 23% | 49% | 50% | 30% | 61% |

The low volatile compounds in Table 5 are typical aroma components generated by fermentation. The recovery rates of the aroma components in the case of separating the aroma components and ethanol using a resin were higher than the recovery rates in the case of RO membrane separation. Moreover, use of a resin enabled separation of the aroma components and ethanol in a shorter time than in the case of using an RO membrane.

### <Example 2>

The recovered aroma components were added to a dealcoholized sample to determine the aroma and taste-imparting effect. Beer A used was the same as that used in Reference Example 1.

The dealcoholized sample of beer was prepared from Beer A by vacuum steam distillation. The vacuum steam distillation was performed under the following conditions using the same apparatus as in Reference Example 1. The ethanol concentration in the obtained dealcoholized sample of beer (hereinafter, referred to as the dealcoholized sample (I)) was 0.001 v/v%.

### (Conditions for vacuum steam distillation)

Raw material feed flow rate: 30 mL/min
Steam temperature: 45°C
Pressure inside column (absolute pressure): 0.0066 MPa
Number of treatments: twice under the conditions above

The aroma components in a distillate (Alc 11.06%) resulting from vacuum steam distillation of Beer A were adsorbed onto an adsorption resin (Muromac^{®} SAP9121, Muromachi Chemical Co., Ltd.) by the same method as in Example 1. The resin was then washed with water, followed by elution of the aroma components with steam. Thus, an aroma solution (Alc 0.02 v/v%) was obtained. The aroma solution was concentrated to produce a concentrated aroma solution (Alc 0.048%).

To 400 mL of the dealcoholized sample (I) obtained above was added 45 mL of the concentrated aroma solution to obtain dealcoholized beer (II) having an ethanol concentration of 0.0048 v/v%.

### (Evaluation)

The dealcoholized sample (I) and the dealcoholized beer (II) were compared in order to confirm that the aroma derived from brewing can be imparted by adding the recovered aroma components.

Sensory evaluation was performed by four trained panelists (panelists A to D). The evaluation items were the following three: brewing aroma unique to beer (unique aroma of beer generated by brewing), smell of wort, and deteriorated aroma and taste. Each panelist put each sample into the mouth to evaluate the sample in terms of the items above on a 13-score scale in 0.25-point increments from 0 to 3 points according to the following criteria. The average score of the panelists was calculated. The smell of wort is considered negative in non-alcoholic beer. Thus, a weaker smell of wort indicates better aroma and taste. The term "deteriorated aroma and taste" means the cooked odor and sourness generated by heating which have a negative effect. If the components deteriorate due to the heat load applied thereto during vacuum distillation, the sample will have further deteriorated aroma and taste.

### (Brewing aroma unique to beer)

0: Very strong brewing aroma unique to beer
1: Average brewing aroma unique to beer
2: Slight brewing aroma unique to beer
3: No brewing aroma unique to beer

### (Smell of wort)

0: No smell of wort
1: Slight smell of wort
2: Average smell of wort
3: Strong smell of wort

### (Deteriorated aroma and taste)

0: No deteriorated aroma and taste
1: Slight deteriorated aroma and taste
2: Average deteriorated aroma and taste
3: Strong deteriorated aroma and taste

Tables 6 to 8 show the scores of the panelists and the averages of the scores. Table 6 shows the evaluation results of the brewing aroma unique to beer. Table 7 shows the evaluation results of the smell of wort. Table 8 shows the evaluation results of the deteriorated aroma and taste.

**[Table 6]**

| Brewing aroma unique to beer | | |
|---|---|---|
| Panelist | Dealcoholized sample (I) | Dealcoholized beer (II) |
| A | 2.75 | 1.5 |
| B | 2.5 | 1 |
| C | 2.5 | 1.5 |
| D | 2 | 1 |
| Average | 2.44 | 1.25 |

**[Table 7]**

| Smell of wort | | |
|---|---|---|
| Panelist | Dealcoholized sample (I) | Dealcoholized beer (II) |
| A | 2 | 1.25 |
| B | 0.5 | 0 |
| C | 1 | 0.5 |
| D | 0.5 | 0.5 |
| Average | 1.00 | 0.56 |

**[Table 8]**

| Deteriorated flavor | | |
|---|---|---|
| Panelist | Dealcoholized sample (I) | Dealcoholized beer (II) |
| A | 2 | 1.5 |
| B | 1 | 0 |
| C | 2 | 1 |
| D | 1 | 1 |
| Average | 1.50 | 0.88 |

The results above show that the brewing aroma unique to beer was successfully imparted by separating the ethanol and the aroma components from beer and adding the aroma components from which the ethanol was removed to the dealcoholized sample of beer. The results also show that the smell of wort and the deteriorated aroma and taste, which were distinct when the ethanol was simply separated from beer, were successfully reduced. Removing ethanol from beer causes a loss of the aroma derived from brewing to reduce the uniqueness of beer. Yet, adding the recovered aroma components from which the ethanol was removed enabled production of dealcoholized beer having the uniqueness of beer as well as a reduced ethanol concentration.

## Claims

1. A method of producing a dealcoholized beverage, the method comprising the steps of:
(A) separating ethanol and an aroma component from an alcohol-containing beverage to obtain a mixture containing the ethanol and the aroma component and a residual liquid which remains after the separation of the ethanol and the aroma component from the alcohol-containing beverage;
(B) bringing a resin into contact with the mixture containing the ethanol and the aroma component to cause the resin to adsorb the aroma component;
(C) removing the ethanol from the resin having adsorbed the aroma component;
(D) recovering the aroma component from the resin from which the ethanol was removed in the step (C); and
(E) mixing the residual liquid obtained in the step (A) with the aroma component obtained in the step (D) to obtain a dealcoholized beverage.

2. The method of producing a dealcoholized beverage according to claim 1,
wherein the alcohol-containing beverage has an ethanol concentration of 0.1 to 60 v/v%.

3. The method of producing a dealcoholized beverage according to claim 1 or 2,
wherein the alcohol-containing beverage is at least one of a brewed alcoholic drink or a distilled alcoholic drink each being made from at least one of a fruit or grain.

4. The method of producing a dealcoholized beverage according to any one of claims 1 to 3,
wherein the alcohol-containing beverage is beer, a fruit wine, or sake.

5. The method of producing a dealcoholized beverage according to any one of claims 1 to 4,
wherein the alcohol-containing beverage is beer.

6. The method of producing a dealcoholized beverage according to any one of claims 1 to 5,
wherein the dealcoholized beverage obtained in the step (E) has an ethanol concentration of lower than 0.005 v/v%.

7. The method of producing a dealcoholized beverage according to any one of claims 1 to 6,
wherein the resin is a styrene-based resin.

8. The method of producing a dealcoholized beverage according to any one of claims 1 to 7,
wherein in the step (C), the ethanol is removed by washing the resin having adsorbed the aroma component with water.

9. The method of producing a dealcoholized beverage according to any one of claims 1 to 8,
wherein in the step (D), the aroma component is recovered by eluting the aroma component from the resin with steam.

10. A method of producing an alcoholic beverage using a dealcoholized beverage produced by the production method according to any one of claims 1 to 9, the method comprising
mixing the dealcoholized beverage and ethanol to adjust the ethanol concentration in the alcoholic beverage.

11. A method of producing an aroma component from an alcohol-containing beverage, the method comprising the steps of:
(A) separating ethanol and an aroma component from an alcohol-containing beverage to obtain a mixture containing the ethanol and the aroma component and a residual liquid which remains after the separation of the ethanol and the aroma component from the alcohol-containing beverage;
(B) bringing a resin into contact with the mixture containing the ethanol and the aroma component to cause the resin to adsorb the aroma component;
(C) removing the ethanol from the resin having adsorbed the aroma component; and
(D) recovering the aroma component from the resin from which the ethanol was removed in the step (C).
